# EUROPEAN PATENT APPLICATION

(11) **EP 1 090 951 A1**
(43) Date of publication of application: **11.04.2001**
(21) Application number: 99913670.8
(22) Date of filing: 15.04.1999
(51) Int. Cl.: C08J 11/08, B29B 17/02, B09B 5/00

(54) **METHOD FOR WASTE PLASTICS DISPOSAL AND APPARATUS USED THEREIN**

(30) Priority: 08.05.1998 JP 12601798; 14.09.1998 JP 26031998; 19.10.1998 JP 29633598; 21.12.1998 JP 36208498; 01.03.1999 JP 5208799; 01.03.1999 JP 5208899
(71) Applicant: NKK CORPORATION, Tokyo 100-0005 (JP)
(72) Inventor: OKADA, Toshihiko, Tokyo 100-0005 (JP); SHIKADA, Tsutomu, Tokyo 100-0005 (JP); ASANUMA, Minoru, Tokyo 100-0005 (JP); ARIYAMA, Tatsuro, Tokyo 100-0005 (JP); KUSUMOTO, Koji, Tokyo 100-0005 (JP); YASUOKA, Hidenori, Tokyo 100-0005 (JP); SUMIGAMA, Takashi, Yokohama-shi, Kanagawa 223-0062 (JP)
(74) Representative: HOFFMANN - EITLE
(86) International application number: JP9902004
(87) International publication number: WO9958599

(57) **Abstract**

The invention is a method for treating waste plastics to efficiently separate and recover plastics and inorganic materials, thus enabling material recycle, through the immersion of the waste plastics that contain inorganic materials such as metals, fibers, wood, glass, and halogenated hydrocarbons, generated from waste automobiles, waste household electric appliances, or the like, in an organic medium such as coal tar base heavy oil, pitch, coal liquefied oil, ethylene bottom oil, and FCC oil, which organic medium has above 400°C of boiling point, 0.2 or higher aromatic index, being heated to temperatures of from 200 to 400°C, or has 300 to 400°C of boiling point and 0.2 or higher aromatic index, which organic medium is heated to temperatures of from 200°C to the boiling point thereof.

## Description

### FIELD OF THE INVENTION

The present invention relates to a method and an apparatus for treating waste plastics, particularly for treating waste plastics containing inorganic materials such as metals, fibers, wood, glass, halogenated hydrocarbons, and the like, which waste plastics are generated from waste automobiles and waste household electric appliances, to separate and recover these inorganic materials from the waste plastics, thus making possible of material recycle.

### BACKGROUND OF THE INVENTION

In recent years, the volume of synthetic resins such as plastics in the industrial waste and municipal waste has increased, and the treatment of these waste plastics has become a serious social issue. In particular, shredder dust generated from waste automobiles and waste household electric appliances contains inorganic materials such as metals, leather, rubber, wood, paper, and glass, other than waste plastics. Accordingly, the shredder dust has a low bulk density of around 0.25 g/cm³, and is a waste which is difficult for handling and for recovery treatment. Also waste plastics that contain polyurethane and foamed resins such as foamed polystyrene resin have very low bulk density, and, in addition, they often contain halogenated hydrocarbons such as chlorofluorocarbons, which makes the handling and recovery treatment thereof difficult.

To apply incineration treatment to waste plastics that contain those kinds of inorganic materials, the heat generated from combustion of the plastics is so high to damage the walls of incineration furnace. Therefore, an exclusive-use incineration facility is required to prevent the furnace walls from being damaged. Furthermore, there are required technologies to recover and fix harmful metals such as zinc and lead existing in the combustion dust. Owing to these issues, waste plastics are currently discarded without further treatment. However, discarding the waste plastics weakens the ground of landfill sites, and also is not favorable in view of environment conservation. Along with the increase in treatment cost, the development of landfill sites have become difficult in recent years. As a result, there is a need of treatment technology to separate and recover the ingredients of waste plastics and to reduce the volume of waste plastics in large scale.

There are various disclosed methods on separating and recovering ingredients of waste plastics containing inorganic materials, some of which methods are described below.

According to JP-A-9677(1975), (the term "JP-A-" herein signifies the "Japanese Patent Laid-Open No."), since polyvinylchloride-base resins generate harmful hydrogen chloride when they are treated in an incineration furnace, a low melting point metal having 200 to 400°C of melting point is heated to melt, and waste plastics containing polyvinylchloride-base resin are immersed in the molten metal for a specified time to decompose thereof to conduct hydrogen chloride removal before incineration of the waste plastics.

According to JP-A-147041(1993), resins such as polyethylene having adhesive property are removed from metals using a waste food oil as the solvent, thus recovering the metals.

According to JP-A-108165(1996), a molten salt that has 250 to 300°C of melting point, corresponding to the flow-point of the target waste plastics, is heated to a temperature 2 to 5°C higher than the melting point of the target waste plastics, then the waste plastics are immersed in the heated molten salt, thus making the flowing waste plastics float onto the surface of the molten salt, while letting the metals, glass, or the like sediment to separate the waste plastics from the metals, glass, or the like, and to recover them separately.

According to JP-A-268297(1997), waste plastics are mixed with waste engine oil, waste lubrication oil, waste washing oil, waste solvent, or the like, which mixture is then heated to temperatures of from 100 to 200°C for 30 to 120 minutes, thus extracting polyethylene, polypropylene, and polystyrene which are existed in the waste plastics, followed by separating solid matter through the liquid-solid separation, and polyethylene, polypropylene, polystyrene, and the extracted mixed solution are utilized as fuels.

According to JP-A-68563(1974), waste plastics containing cellulose are separated by the wind separation method.

According to JP-A-147038(1993), a foamed resin is pulverized to 0.1 mm or smaller size, and halogenated hydrocarbons existed inside of the resin are removed.

According to JP-A-248548(1997), a foamed resin is carbonized at high temperatures, thus recovering hydrocarbons along with halogenated hydrocarbons.

According to JP-A-64375(1975), JP-A-219186(1992), and JP-A-115816(1980), discussion is given on the method of reclamation of foamed resins as a bromide, the method of separation of foamed resins by dissolving or reducing the volume thereof in organic chlorine-base solvents such as chloroform and trichloethylene. Other than those methods, shredder dust treatment, and incineration or gasification treatment using incineration-melting furnace including power generation are positively studied.

The above-described conventional technologies are, however, the ones dealing with a composite waste of a specified resin plastic and a specified inorganic material to separate and reuse the plastic. Accordingly, these technologies are not the ones for treating waste plastics that separate and recover the ingredients of composite waste consisting mainly of various kinds of plastics, steel materials, aluminum, copper, zinc, lead, glass-reinforced composite materials, which are observed in waste automobiles, waste household electric appliances, and waste OA equipment, further the ingredients of composite waste consisting mainly of many kinds of inorganic materials including leather, wood, paper, halogenated hydrocarbons such as chlorofluorocarbons, thus enabling material recycle.

According to the methods disclosed in JP-A-9677(1975) and JP-A-108165(1996) that use molten metal and molten salt as the heating medium, harmful ingredients may enter the metal being recovered, thus making the smelting of the recovered metal difficult or inducing degradation of walls of the melting furnace. In view of cost reduction, the heating medium such as those kinds of molten metals and molten salts are necessary for reuse. To this point, problems appear owing to the residual metal chloride in the molten metal, and the residual plastics and inorganic materials in the molten salt, which hinders the reuse of the heating medium. Furthermore, if nitrate is used as the molten salt, NOx may be generated.

According to the method disclosed in JP-A-268297(1997) that uses waste oil as the heating medium, since a specified polymer (polyethylene, polypropylene, polystyrene) is dissolved in a waste oil at a low temperature that does not induce decomposition of the polymer, the oil raises its viscosity when it is added to a level close to the saturation solubility, which makes the liquid-solid separation difficult, and, when treating plastics that contain chlorine compounds such as vinylchloride, chlorine is left in the liquid phase, thus raising a problem in succeeding treatment stage.

According to the method disclosed in JP-A-68563(1974) that uses wind separation method, low specific gravity plastics and rubber which are caught by fibers cannot be recovered. According to the method disclosed in JP-A-147038(1993), the recovery rate of halogenated hydrocarbons is poor. According to the method disclosed in JP-A-248548(1997), a complex process is required to separate halogenated hydrocarbons from general hydrocarbons and from gases, which is inefficient technology.

### DISCLOSURE OF THE INVENTION

An object of the present invention is to provide a method and an apparatus for treating waste plastics, which method and apparatus efficiently separate and recover ingredients of waste plastics that contain various kinds of inorganic materials, thus enabling the material recycle.

The above-described object is attained by a method for treating waste plastics comprising the steps of: immersing the waste plastics in an organic medium that has above 400°C of boiling point, 0.2 or higher aromatic index, and being heated to temperatures of from 200 to 400°C, or alternatively, the organic medium has 300 to 400°C of boiling point, 0.2 or higher aromatic index, and being heated to temperatures of from 200°C to the boiling point thereof; and separating the plastics from inorganic materials.

The waste plastics being treated are preferably shredder dust.

The organic medium is preferably an organic medium that contains a plastic decomposition catalyst, that contains pitch or an agent to raise the softening point, or both thereof, and has 50 to 150°C of softening point, or that contains pitch or an agent to raise the softening point, or both thereof, has 50 to 150°C of softening point, and has 200 CP or smaller viscosity in heated state.

On treating waste plastics that contain halogenated hydrocarbons or waste plastics that contain chlorine, material recycle is realized if only the halogenated hydrocarbons and hydrogen chloride which are emitted during the immersion of waste plastics in an organic medium are recovered.

Applicable apparatus for treating waste plastics that contain halogenated hydrocarbons includes a waste plastic treatment apparatus comprising a waste plastic feed unit, a heat treatment tank kept in a non-oxidizing gas atmosphere and filled with an organic medium, a compressor that compresses flue gas emitted from the heat treatment tank, and a condenser that cools and condenses the compressed flue gas.

On treating waste plastics that contain metals, it is further effective that, during immersing the waste plastics that contain metals in the organic medium, the immersion is carried out while circulating the organic medium which contains a blasting material, or that, before immersing the waste plastics that contain metals in the organic medium, the waste plastics that contain metals are treated by blasting.

When the waste plastics are waste rubber, it is more effective to immerse the waste rubber, after pulverizing into pieces of 10 mm or smaller average particle size, in an organic medium that has above 350°C of boiling point, has 0.2 or higher aromatic index, and is heated to temperatures of from 250 to 350°C. or in an organic medium that has 300 to 350°C of boiling point, has 0.2 or higher aromatic index, and is heated to temperatures of from 250°C to the boiling point thereof; and to separate the rubber from inorganic materials.

On treating waste plastics that contain metals, similar effect is attained by the steps of: immersing the waste plastics that contain metals in a powder fluidized bed that contains a plastic decomposition catalyst and is heated to temperatures of from 200 to 800°C; and separating the plastics from the metals.

### BRIEF DESCRIPTION OF THE DRAWINGS

Fig. 1 is an example of the apparatus for treating waste plastics that contain halogenated hydrocarbons, according to the present invention.
Fig. 2 is another example of the apparatus for treating waste plastics that contain halogenated hydrocarbons, according to the present invention.
Fig. 3 shows a mode of method for treating waste plastics that contain metals, according to the present invention.
Fig. 4 shows another mode of method for treating waste plastics that contain metals, according to the present invention.

### BEST MODE FOR CARRYING OUT THE INVENTION

The inventors of the present invention found that immersing waste plastics in a heated organic medium is effective for efficiently separating and recovering the ingredients of the waste plastics that contain inorganic materials, and for enabling material recycle.

Applicable waste plastics that contain inorganic materials for the method according to the present invention are mainly come from waste automobiles, waste household electric appliances, waste OA equipment, and the like. The plastics that can be treated include not only the plastics such as polyethylene, polypropylene, polystyrene, and polyvinylchloride, but also synthetic rubbers such as butadiene rubber and isoprene rubber, and further natural rubbers. Even for composite materials consisting of combined or blended individual plastics, they can be treated by the method according to the present invention. Treatable inorganic materials include: metals such as iron, copper, aluminum, zinc, lead, alloy of these metals; aggregates of carbon black, talc, silica, calcium carbonate, inorganic fibers, or the like; non-metals such as glass and sand; and gas phase inorganic materials such as halogenated hydrocarbons and chlorine.

Waste plastics that contain inorganic materials are treatable even in as-accepted state. It is, however, more favorable to cut them in pieces to approximate sizes of from 0.01 to 100 mm, particularly from 0.05 to 50 mm, using a shredder or the like. It is further favorable that the waste automobiles and the waste household electric appliances are treated in a form of what is called the "shredder dust", or the waste chips consisting mainly of plastics, fibers, metals, glass, and the like, prepared by pulverizing the waste in a shredder, guillotine, shearing device, and the like, followed by recovering metals.

The organic medium is necessary to be an organic medium that does not include harmful ingredients such as alkali, which give bad influence to the smelting of metals separated and recovered from the waste plastics, and that is applicable as a blast furnace reducing agent and as a fuel. From the point of reuse, the organic medium is requested to be not-degraded independent of the immersion temperatures and to be readily separated from the separated inorganic materials such as metals. Furthermore, the organic medium is necessary to be an organic solvent that allows the separated plastics float for separation or uniformly disperse. Although the plastics may be dissolved in organic medium or may be not-dissolved therein, uniform dispersion, not dissolving, is more preferable since the dissolved plastics may induce changes in viscosity of the organic medium. An organic medium that satisfies the conditions is the organic medium that has the ratio of the number of aromatic carbons to the total number of carbons, determined by the Brown-Ladner method (J.K. Brown, W.R. Ladner and N. Sheppart; Fuel, vol.39, 79 (1960)), or the aromatic index of 0.2 or more, further preferably from 0.25 to 0.95. Examples of the organic medium include heavy oil of coal tar basis, pitch, coal-liquefied oil, petroleum-base vacuum distillate residue derived from specific oil grades (containing large amount of aromatics, such as Khafji oil), ethylene bottom oil, modified oil, FCC oil, and their mixtures. Furthermore, waste oil and waste lubrication oil may be added if only they do not significantly degrade the characteristics as above-described organic medium.

For the case of organic medium giving above 400°C of boiling point, the medium may be heated to temperatures of from 200 to 400°C before immersing waste plastics. For the case of organic medium giving 300 to 400°C of boiling point, the medium may be heated to a range of from 200°C to the boiling point thereof before immersing waste plastics. That kind of pre-heating allows the plastics to melt or to conduct catalytic decomposition to become low molecular weight materials or to gasify, thus the plastics are separated from inorganic materials. Particularly, the melted plastics give low solubility in organic medium so that they can be separated by floating or be coagulated and dispersed. On the other hand, to recover the metals sedimented in the immersion tank or to recover the non-metallic inorganic materials that are dispersed in and floated on the organic medium, there are applicable methods such as the magnetic separation for magnetic metals such as iron, the electrostatic separation or the wind separation for non-magnetic metals such as copper and zinc, the ammonia extraction or acid dissolution for copper, and the filtration for non-metals such as carbon black, thus enabling the material recycle.

Through these kinds of heat treatments, volume reduction of waste plastics of very low bulk density, ranging from 0.001 to 0.1 g/cm³, is attained. Examples of the very low density waste plastics are foamed resins and packaging materials such as foamed polystyrene, foamed polyethylene, foamed polypropylene, foamed polyvinylchloride, foamed rubber, EVA foam, ABS foam, nylon foam, polyacrylic foam, polyurethane foam, urea resin foam, polyphenolic foam, and epoxy foam; products containing fibers, such as carpet, pulp, insulation material, and cushion.

Dissolving plastics in organic medium is accelerated when the organic medium contains: acid catalyst such as 0.5 to 50 wt.% Lewis acid and 0.5 to 50 wt.% Brøensted acid; solid acid such as FCC catalyst of silica-alumina basis and zeolite basis, and hydrogenation catalyst; concentrated sulfuric acid as a alkylation catalyst; and plastic decomposition catalyst such as HF and AlCl₃.

When the organic medium contains an agent to raise softening point, such as 5 to 95 wt.% of pitch, 0.1 to 20 wt.% of phenylenediamine, benzoyl peroxide, azobisisobutylonitrile, aluminum chloride, N-dodecanoyl-L-grutamate, and α,γ-dibutylamide, the softening point of the organic medium becomes to a range of from 50 to 150°C, thus the recovery treatment of separated plastics becomes easy. If, an organic medium that gives 200 CP or smaller viscosity in heated state, the separation of plastics from inorganic materials is further easily conducted.

When waste plastics that contain halogenated hydrocarbons or waste plastics such as polyvinylchloride resin that contains chlorine are immersed in an organic medium, the halogenated hydrocarbons and hydrogen chloride are emitted from respective plastics. The emitted halogenated hydrocarbons are condensed by compression and cooling, and the hydrogen chloride is washed with water to convert it to hydrochloric acid. When these condensed halogenated hydrocarbons and hydrochloric acid are recovered, the gas phase inorganic materials are possible to establish material recycle, which also contributes to the environmental conservation.

Treatment of waste plastics that contain halogenated hydrocarbons is conducted by a waste plastic treatment apparatus that comprises a waste plastic feed unit, a heat treatment tank kept in a non-oxidizing gas atmosphere and filled with an organic medium, a compressor that compresses flue gas emitted from the heat treatment tank, and a condenser that cools and condenses the compressed flue gas.

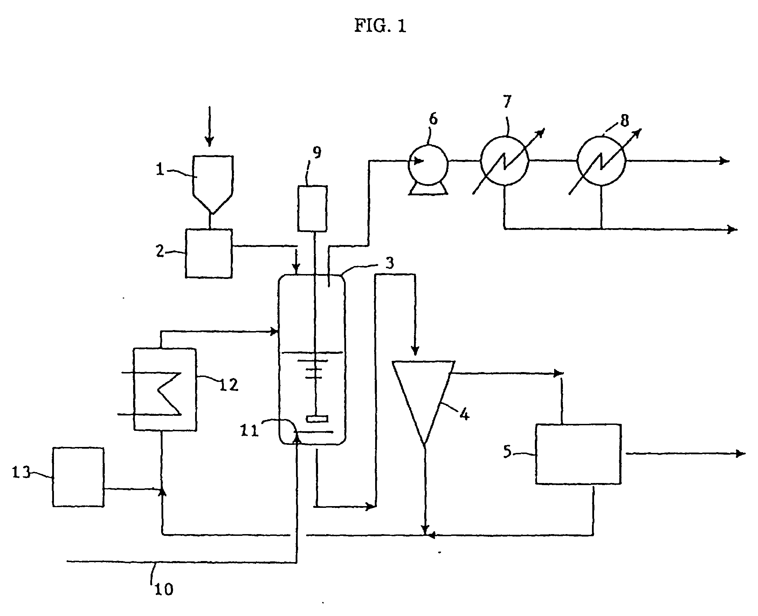

Fig. 1 shows an example of the apparatus for treating waste plastics that contain halogenated hydrocarbons according to the present invention.

The apparatus comprises: a waste plastic hopper 1; a rotary feeder 2 that withdraws the waste plastics from the waste plastic hopper 1 and that continuously feeds the plastics to succeeding stage; a heat treatment tank 3 that is for immersing the waste plastics and that is filled with the organic medium which is heated in a heating unit 12; a specific gravity separation tank 4 that separates plastics from the mixture of plastics and organic medium, withdrawn from the heat treatment tank 4, by specific gravity; a liquid-solid separation tank 5 that separates the organic medium from the plastics withdrawn from the specific gravity separation tank 4; a compressor 6 that compresses the flue gas emitted from top of the heat treatment tank 3; a water cooler-condenser 7 and a coolant condenser 8 that cool the compressed flue gas.

The heat treatment tank 3 is provided with an agitator 9 at the top thereof, while a nitrogen gas feed pipe 10 is connected to the bottom thereof. The nitrogen gas is ejected from a disperser 11 to maintain the atmosphere in the heat treatment tank 3 in an non-oxidizing gas state. Each bottom of the specific gravity separation tank 4 and the liquid-solid separation tank 5 is provided with an organic medium withdraw pipe. Both of the withdraw pipes join together to reach the heating unit 12. The heating unit 12 is connected to the heat treatment tank 3, thus forming a circulation line of organic medium as the total. An organic medium tank 13 for make up of the organic medium is connected to the middle of the circulation line.

For treating waste plastics that contain halogenated hydrocarbons, the organic medium is withdrawn from the organic medium tank 13, and is heated in the heating unit 12 to temperatures of, for example, from 250 to 300°C, then is supplied to the heat treatment tank 3. The recovered and pulverized waste plastics are taken out from the hopper 1, and are continuously charged to the heat treatment tank 3 along with the organic medium using a rotary feeder. In the heat treatment tank 3 where the supplied nitrogen gas keeps the non-oxidizing atmosphere, the agitator 9 mixes the organic medium with the waste plastics. The plastic portion of the waste plastics is melted and decomposed to reduce the total volume of the mixture. At that moment, the flue gas containing halogenated hydrocarbons such as free chlorofluorocarbons is compressed to several atms by the compressor 6, then is water-cooled in the water cooler-condenser 7 and further is cooled to around -30°C in the coolant condenser 8, and finally the halogenated hydrocarbons are liquefied and recovered. The apparatus achieves about 98% recovery rate. On the other hand, the mixture of plastics and organic medium, which was treated in the heat treatment tank 3, is transferred to the specific gravity separation tank 4, where the floated plastics are recovered. The floated and separated plastics are further sent to the liquid-solid separation unit 5, where the organic medium attached to the plastics is separated and recovered. The recovered organic medium is returned to the heat treatment tank 3 for reuse.

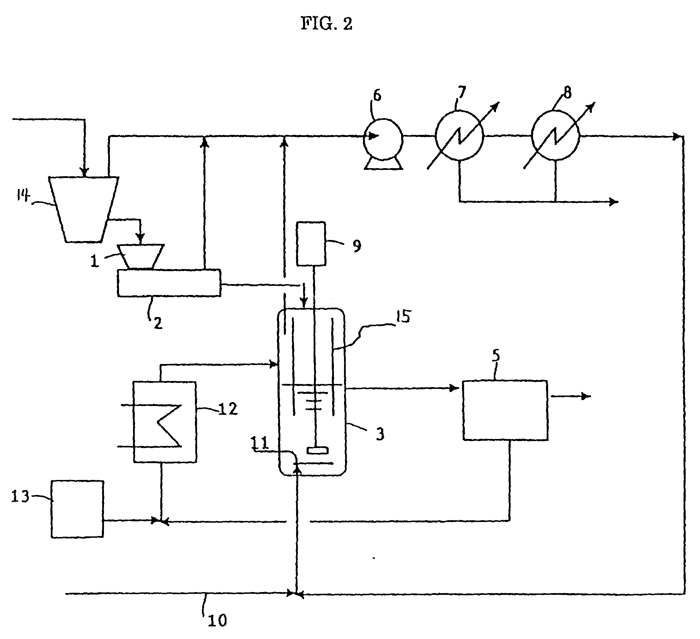

Fig. 2 shows another example of the apparatus for treating waste plastics that contain halogenated hydrocarbons according to the present invention.

According to the apparatus, a closed rotary pulverizer 14 is placed to pulverize the waste plastics at upstream side of the hopper 1 of Fig. 1, and the hopper 1 is closed-type. The heat treatment tank 3 is further equipped with inner pipes 15 to provide a function of the specific gravity separation tank. Thus, the specific gravity tank 4 shown in Fig. 1 is eliminated. Adding to the heat treatment tank 3, the flue gas is sent to the compressor 6 also from the closed-type rotary pulverizer 14 and from the screw feeder 2. The flue gas consisting mainly of nitrogen gas, which was not condensed in the water cooler-condenser 7 and the coolant condenser 8, is sent to the nitrogen gas feed pipe 10, then returned to the heat treatment tank 3 for reuse.

For treating waste plastics that contain halogenated hydrocarbons, the waste plastics are preliminarily pulverized to a size of 20 x 20 mm by the closed-type rotary pulverizer 14. Halogenated hydrocarbons such as chlorofluorocarbons generated during pulverizing are recovered while passing through the compressor 6, the water cooler-condenser 7, and the coolant condenser 8. The pulverized waste plastics are charged to the heat treatment tank 3 via the screw feeder 22. The halogenated hydrocarbons generated in the heat treatment tank 3 is also recovered while passing through the compressor 6, the water cooler-condenser 7, and the coolant condenser 8. The heated organic medium and the pulverized waste plastics are continuously charged to the upper portion of the heat treatment tank 3. An agitator 9 is mounted in inner space of the inner pipes 15 of the heat treatment tank 3. The organic medium and the waste plastics are mixed together and are thermally treated in the heat treatment tank 3, thus separating the plastic portion utilizing the specific gravity difference of the ingredients. The separation by specific gravity is accelerated by the nitrogen gas ejected from the disperser 11 located at bottom portion of the heat treatment tank 3. After that, the plastics and the halogenated hydrocarbons are separated from each other and are recovered separately through similar process with that of Fig. 1, and are reused.

When waste plastics that contain metals are immersed in an organic medium, if the organic medium that contains 1 to 30 wt.% of blasting material such as alumina and dried non-viscous silica sand is circulated, or if the waste plastics that contain metals are treated by the above-described blasting material before immersing the plastics in the organic medium, the surface of the plastics generates cracks, which allows easy penetration of the organic medium into the plastics to enhance the softening and melting of the plastics, further to accelerate the separation of plastics from metals.

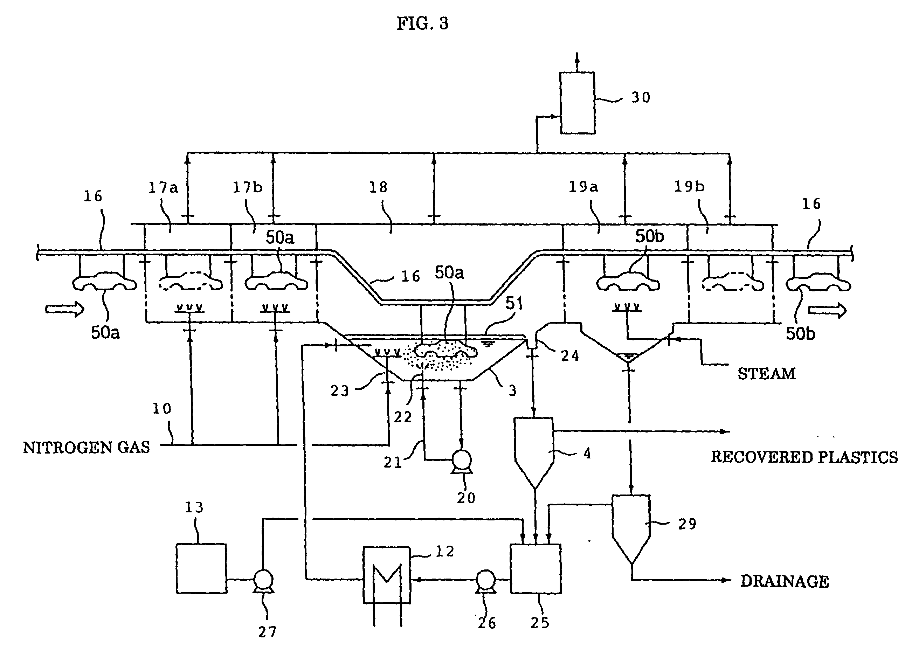

Fig. 3 shows an example of the method for treating waste plastics that contain metals according to the present invention. The figure is an example of immersion treatment in that a waste automobile is bodily immersed in an organic medium while circulating the organic medium that contains a blasting material.

A waste automobile skeleton 50a after removed useful parts such as engine, tires, battery, fuel tank, exhaust gas treatment catalyst, and the like, is transferred by a trolley conveyer 16. The waste automobile skeleton 50a is then sent to an apparatus for treating waste plastics that contain metals, which apparatus comprises deaeration chambers 17a, 17b, each of which is separated by a door from each other, a heating chamber 18, and washing chambers 19a, 19b. The deaeration chambers 17a, 17b are located for conducting the treatment of the waste automobile skeleton 50a in a non-oxidizing atmosphere. The air inside of the deaeration chambers 17a, 17b is replaced by nitrogen gas which is introduced from the nitrogen gas feed pipe 10. The heating chamber 18 is provided with the heat treatment tank 3 filled with an organic medium, at a specified temperature, containing a blasting material such as alumina and dried non-viscous silica sand. The waste automobile skeleton 50a is immersed in the organic medium to let the plastic portion soften and melt. The metals and the plastics are separated from each other by overflowing the molten plastics 51 from the overflow opening 24 of the heat treatment tank 3 along with the organic medium. The heat treatment tank 3 is provided with an organic medium circulation line comprising a circulation pump 20 and a circulation piping 21. The withdrawn organic medium is ejected through plurality of nozzles 22 toward the target waste automobile skeleton 50a. To agitate the liquid in the heat treatment tank 3, nitrogen gas injection nozzles 23 are attached thereto. The mixture of overflown molten plastics 51 and the organic medium is sent to the specific gravity separation tank 4, from where the plastics are withdrawn from the upper portion thereof. The organic medium after separated the plastics is sent to a receiver tank 25, and is returned to the heat treatment tank 3 via a recycle pump 26 and a heating unit 12. The volume of consumed organic medium is supplied from the organic medium tank 13 to the heat treatment tank 3 using a make up pump 27. In the washing chamber 19a, high temperature steam is ejected from the steam nozzles 28 against the waste automobile skeleton 50b after removing the plastics in the heat treatment tank 3, thus removing the organic medium. The waste automobile skeleton 50b came out from the washing chamber 19a is in a state applicable as a raw material of metal smelting. The organic medium washed out in the washing chamber 19a is collected along with condensate to an oil-water separator 29. The organic medium is sent to the receiver tank 25, where the organic medium is reheated together with the organic medium overflown from the heat treatment tank 3, then they are returned to the heat treatment tank 3. The flue gas generated from each of the above-described chambers is sent to a flue gas treatment unit 30, and a part of the plastics is decomposed in the heating chamber 18 to separate the generated hydrogen chloride gas and the organic medium.

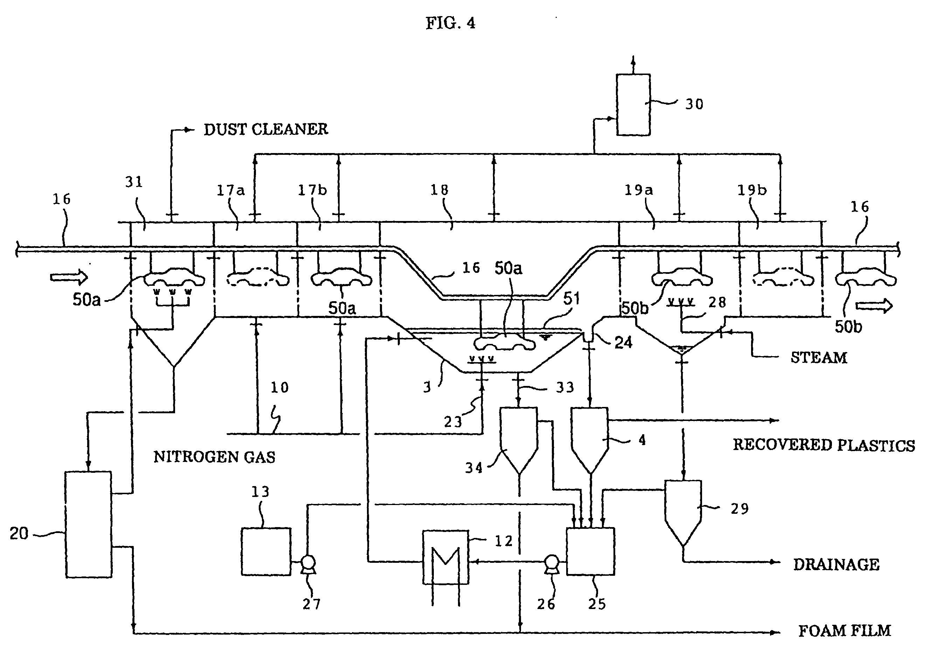

Fig. 4 shows another mode of the method for treatment of waste plastics that contain metals according to the present invention.

The method is, similar with Fig. 3, for treating a waste automobile bodily by immersing thereof in an organic medium. The method has a feature that a blasting chamber 31 is located before the deaeration chambers 17a, 17b, thus treating the waste automobile skeleton 50a by blasting before immersing thereof in the organic medium. That is, a waste automobile skeleton 50a after removed useful parts such as engine, tires, battery, fuel tank, exhaust gas treatment catalyst, and the like, is transferred to the blasting chamber 31, where the waste automobile skeleton 50a is subjected to blasting using a blast generation unit 32 that is connected to the blasting chamber 31 and that ejects blasting material. The ejected blasting material and the separated coating films are recovered by the blast generation unit 32, and the coating films are discharged from the blast generation unit 32. Since the waste automobile skeleton 50a is treated by blasting before being immersed in the organic medium, there are no circulation pump 20, circulation piping 21, plurality of nozzles 22, which are shown in Fig. 3. Instead of these devices, a discharge nozzle 33 is located at bottom of the heat treatment tank 3 to discharge the separated coating films along with the organic medium together, at need. The organic medium that contains coating films is sent to the liquid-solid separation tank 34 to separate from each other. The separated organic medium is sent to the receiver tank 25, and it is then sent to the heat treatment tank 3 along with other recovered organic medium, for reuse. The coating films are discarded together with the coating films that are discharged from the blasting chamber 31. Other stages are the same with those of Fig. 3.

In the case that the waste plastics that contain inorganic materials are waste rubber such as waste tire, waste rubber belt, and waste rubber packing, if the waste rubber is cut to pieces having 10 mm or smaller average size, and if they are immersed in an organic medium that has above 350°C of boiling points, 0.2 or higher aromatic indexes, and heated to temperatures of from 250 to 350°C, or alternatively in an organic medium that has 300 to 350°C of boiling point, 0.2 or higher aromatic indexes, and heated to temperatures of from 250°C to the boiling point thereof, then the rubber is effectively separated from inorganic materials such as carbon black.

For the case of treatment of waste plastics that contain metals, similar effect to the immersion in an organic medium as described above is obtained by immersing the plastics in a powder fluidized bed that contains: organic acid such as Lewis acid and Brensted acid; plastic decomposition catalyst such as solid acid including FCC catalyst of silica-alumina basis and zeolite basis, and hydrogenation catalyst; and that is heated to temperatures of from 200 to 800°C. Applicable powders include a mixture of a plastic decomposition catalyst having 0.01 to 10 mm of average particle size, silica sand, alumina powder, and beads each having 0.1 to 50 mm of average particle size, or a 100% plastic decomposition catalyst. When that kind of powder is filled in, for example, a sand bath, and when a non-oxidizing gas such as nitrogen and argon is used as the fluidizing medium, the treatment by a powder fluidized bed is applicable.

The time for immersing waste plastics in an organic medium or in a powder fluidized bed is determined to fully progress the melting and decomposition of plastic portion, and the time differs with the kind and volume of applied plastics. Normally, 0.5 to 30 minutes are sufficient for the treatment. The pressure for immersion may be atmospheric pressure.

The plastics thus recovered can be used as a blast furnace reducing material or a fuel either after removing organic medium or together with organic medium.

### Example 1

A steel rod (20 mm in outer diameter and 20 mm in length) was coated by each of waste plastics that contain inorganic materials by thermal molding to prepare respective metal composite plastics (polypropylene, polystyrene, polyethylene) having 30 mm in outer diameter, 20 mm in inner diameter, and 20 mm in length. Thus prepared composite plastics specimens were subjected to heat treatment described below.

A coal tar heavy oil having 300 to 500°C of boiling point and 0.9 of aromatic index was used as the organic medium. The specimens were immersed in a reaction furnace, which was filled with the organic medium heated to 300°C, for 2 minutes. After the immersion, the specimens were taken out from the furnace, and the weight thereof was determined to derive the separation rate of plastics from the steel rod.

The result is shown in Table 1. As seen in the table, all the tested plastics gave 90% or higher separation rate.

### Example 2

A petroleum vacuum distillate residue having 350°C or higher boiling point and 0.47 of aromatic index was used as the organic medium. The waste plastics that contain inorganic materials were treated in a similar procedure as in Example 1. The separation rate of plastics from the steel rod was determined.

The result is shown in Table 1. As seen in the table, all the tested plastics gave 87% or higher separation rate.

### Example 3

A coal tar, having 0.65 of aromatic index, after distilled to remove the ingredients having 300°C or higher boiling point, was used as the organic medium. The waste plastics that contain inorganic materials were treated in a similar procedure as in Example 1. The separation rate of plastics from the steel rod was determined.

The result is shown in Table 1. As seen in the table, all the tested plastics gave 89% or higher separation rate.

### Example 4

An alkyl diphenyl having 350°C of boiling point and 0.86 of aromatic index was used as the organic medium. The waste plastics that contain inorganic materials were treated in a similar procedure as in Example 1. The separation rate of plastics from the steel rod was determined.

The result is shown in Table 1. As seen in the table, all the tested plastics gave 89% or higher separation rate.

### Example 5

A mixture of a coal tar heavy oil having 300 to 550°C of boiling point, 0.9 of aromatic index, and containing 10 wt.% of silica-alumina FCC catalyst was used as the organic medium. The waste plastics that contain inorganic materials were treated in a similar procedure as in Example 1. The separation rate of plastics from the steel rod was determined.

The result is shown in Table 1. As seen in the table, all the tested plastics gave 97% or higher separation rate if the plastic-decomposition catalyst is added.

### Example 6

A mixture of a coal tar heavy oil having 300 to 550°C of boiling point and 0.9 of aromatic index, and containing 10 wt.% of aluminum chloride plastics-decomposition catalyst was used as the organic medium. The waste plastics that contain inorganic materials were treated in a similar procedure as in Example 1. The separation rate of plastics from the steel rod was determined.

The result is shown in Table 1. As seen in the table, all the tested plastics gave 95% or higher separation rate if the plastic-decomposition catalyst is added.

### Comparative Example 1

A petroleum vacuum distillate residue having 280°C or higher boiling point and 0.15 of aromatic index was used as the organic medium. The waste plastics that contain inorganic materials were treated in a similar procedure as in Example 1. The separation rate of plastics from the steel rod was determined.

The result is shown in Table 1. As seen in the table, all the tested plastics gave only around 60% of separation rate because the organic medium had boiling point and aromatic index outside of the specified range of the present invention.

**Table 1**

| Resin | Polypropylene | Polystyrene | Polyethylene |
|---|---|---|---|
| Example 1 | 94 | 92 | 93 |
| Coal tar heavy oil | | | |
| Example 2 | 91 | 90 | 87 |
| Petroleum residue | | | |
| Example 3 | 93 | 91 | 89 |
| Distilled coal tar | | | |
| Example 4 | 91 | 90 | 89 |
| Alkyl diphenyl | | | |
| Example 5 | 98 | 98 | 91 |
| FCC catalyst | | | |
| Example 6 | 97 | 99 | 95 |
| AlCl₃ | | | |
| Comparative Example 1 | 50 | 60 | 65 |
| Petroleum residue | | | |

### Example 7

A coal tar heavy oil having 300 to 550°C of boiling point and 0.9 of aromatic index was heated to 300°C to fill a reaction furnace in a nitrogen atmosphere. A door (7 kg) which was removed from a waste automobile and which contained 8.5% of plastics was immersed in the furnace for 2 minutes. After the immersion, the door was taken out from the furnace, and was bought into a washing chamber, where steam is ejected against the door to remove solvent therefrom.

The plastics floated on the coal tar heavy oil were filtered to separate to recover. The recovery ratio, or the recovered amount of the plastics to the total amount of plastics in the door, was 90%. The carbon amount adhered to the door was 0.1 wt.% or less.

### Example 8

A coal tar, having 0.65 of aromatic index, after distilled to remove the ingredients having 300°C or higher boiling points was used as the organic medium. A door of a waste automobile was treated in a similar procedure as in Example 7.

The recovery rate of the plastics that were filtered and separated from the treated coal tar distillate was 91%.

Furthermore, the filtered and separated coal tar distillate was used to repeat similar treatment. The recovery rate of the plastics was 93% for the second cycle, and 94% for the third cycle.

### Example 9

A mixture of a coal tar heavy oil having 300 to 550°C of boiling point and 0.9 of aromatic index, and containing 10 wt.% of FCC catalyst was used as the organic medium. The door of a waste automobile was treated in a similar procedure as in Example 1.

The recovery rate of plastics that were filtered and separated from the treated coal tar distillate was 97%.

Furthermore, the filtered and separated coal tar distillate was used to repeat similar treatment. The recovery rate of the plastics was 97% for the second cycle, and 98% for the third cycle.

### Example 10

A coal tar heavy oil having 350 to 550°C of boiling point and 0.9 of aromatic index was heated to 300°C to fill a reaction furnace in a nitrogen atmosphere. A shredder dust which contained 40 wt.% plastics and 10 wt.% iron was immersed in the furnace for 2 minutes. After the immersion, the iron was recovered by a magnetic separator.

The recovered amount of iron was 95% of the total content of iron in the base material.

The recovery rate of the plastics floated on the coal tar heavy oil and dissolved in the coal tar heavy oil was 65% and 20%, respectively.

Furthermore, similar with the case of Example 9, the similar treatment was repeated using the filtered and separated coal tar heavy oil. The recovery rate of the floated plastics and the dissolved plastics was 75% and 10%, respectively.

Furthermore, the coal tar heavy oil was filtered and separated, and the recovery rate of floated plastics and of dissolved plastics after third repeated cycles was 80% and 5%, respectively.

The recovery rate of plastics that were floated and that were dissolved after tenth repeated cycles was 82% and 3%, respectively. Thus, the filtered and separated organic medium is able to be repeatedly used.

### Example 11

A petroleum vacuum distillation residue having 300°C or higher boiling point and 0.28 of aromatic index was used as the organic medium. Shredder dust was treated by a similar procedure as in Example 10.

The recovery rate of treated iron was 91%, the recovery rate of plastics that were floated on the surface of petroleum vacuum distillation residue was 5%, and the recovery rate of plastics that were dissolved in petroleum vacuum distillation residue was 33%.

### Example 12

A mixture of coal tar that has 350 to 550°C of boiling point and 0.9 of aromatic index and an organic medium in which 10 wt.% silica-alumina FCC catalyst was dispersed therein was used as the organic medium. A shredder dust was treated in a similar procedure as in Example 10.

The recovery rate of iron after the treatment was 95%, the recovery rate of plastics that were floated onto the surface of the coal tar heavy oil was 68%, and the recovery rate of plastics that were dissolved in the coal tar heavy oil was 30%.

### Example 13

Cut pieces (50 mm in length, 1 mm in diameter, 100 g of weight) of polyethylene-coated copper wire (30 wt.% of the content of polyethylene) was immersed in a treatment furnace heated to 350°C and filled with a coal tar distillate having 300 to 550°C of boiling point and having 0.8 of aromatic index, for 5 minutes.

After the immersion, the copper wire sedimented in the treatment furnace and the polyethylene floated onto the surface of the coal tar distillate were recovered to analyze. The copper wire had adhered 0.5 wt.% carbon, and the recovery rate of polyethylene was 88%.

### Example 14

A polyethylene-coated optical fiber cable (1mm in diameter, 50 mm in length, 100 g of weight), which fiber consisting of 30 wt.% polyethylene and 70 wt.% optical fiber, was immersed in a treatment furnace heated to 350°C and filled with an alkyl diphenyl having 350°C of boiling point and 0.86 of aromatic index, for 5 minutes.

After the immersion, the optical fiber sedimented and the polyethylene floated onto the surface of the coal tar distillate were recovered and analyzed. The optical fiber had 0.5 wt.% of adhered carbon. The recovery rate of the polyethylene was 92%.

### Example 15

A waste tire consisting of 30 wt.% carbon black, 8 wt.% steel wires, 60 wt.% rubber, and 2 wt.% of other materials was pulverized to pieces of 50 x 50 mm in size. A 1000 g aliquot of the pieces of the waste tire was immersed in a treatment furnace heated to 300°C and filled with a coal tar distillate having 350°C or higher boiling point and 0.9 of aromatic index, for 20 minutes.

After the immersion, the floated and separated rubber and the sedimented steel wires were recovered. In addition, the carbon black that was uniformly dispersed in the solvent at 200°C was recovered. The recovery rate of the rubber, the steel wires, and the carbon black was 80%, 98%, and 70%, respectively. The carbon adhered to the steel wires was 1.0 wt.% or less.

### Example 16

A waste rubber belt conveyer consisting of 25 wt.% carbon black, 10 wt.% steel wires, 60 wt.% rubber, and 5 wt.% of other materials was pulverized to pieces of 50 x 50 mm in size. A 1000 g aliquot of the pieces of the waste rubber belt conveyer was immersed in a treatment furnace heated to 300°C and filled with a petroleum vacuum distillate residue having 300°C or higher boiling point and 0.4 of aromatic index, for 20 minutes.

In a similar procedure as given in Example 15, the rubber, the steel wires, and the carbon black were recovered. The recovery rate of the rubber, the steel wires, and the carbon black was 85%, 90%, and 65%, respectively. The carbon adhered to the steel wires was 1.0 wt.% or less.

### Comparative Example 2

A petroleum vacuum distillate residue having 280°C of boiling point and having 0.15 of aromatic index was used as the organic medium. A door was treated in a similar procedure as in Example 7.

The recovery rate of the filtered and separated plastics was 55%. Since the petroleum vacuum distillate residue was very viscous liquid and since the separation thereof from plastics was not easy, the repeated use of the petroleum vacuum distillate residue was difficult.

### Comparative Example 3

Similar to Example 6, a door of waste automobile was treated applying a molten salt (KNO₃-NaNO₂-NaNO₃) instead of organic medium.

The recovery rate of filtered and separated plastics was 30%. Non-melted resins are adhered to the door, and molten salt was left inside of the door.

### Comparative Example 4

A shredder dust was treated in a similar procedure as in Example 10 applying a petroleum vacuum distillate residue having 280°C of boiling point and 0.15 of aromatic index as the organic medium.

After the treatment, the iron which was magnetically separated held fibers and other foreign matter, and these attached materials were difficult for removing from the iron. No plastics were floated for separation, and the residue oil showed very high viscosity. Since the applied petroleum vacuum distillate residue was difficult to be separated from plastics, its repeated application was difficult.

### Comparative Example 5

Polyethylene-coated copper wires were treated, instead of waste plastics that contained inorganic materials in Example 1, by a similar procedure as in Comparative Example 1.

The recovery rate of polyethylene was 25%. The recovered copper wires held 9.5 wt.% carbon, and the residue oil was a highly viscous liquid.

### Comparative Example 6

Polyethylene-coated optical fiber cables were treated, instead of waste plastics that contained inorganic materials in Example 1, by a similar procedure as in Comparative Example 1.

The recovery rate of polyethylene was 25%. The recovered copper wires held 9.5 wt.% carbon, and the residue oil was a highly viscous liquid.

### Comparative Example 7

Waste tire chips in Example 15 were treated, instead of waste plastics that contained inorganic materials in Example 1, by a similar procedure as in Comparative Example 1.

The recovery rate of rubber, steel wires, and carbon black was 55%, 65%, and 30%, respectively. The steel wires held 6 wt.% non-separated rubber. The residue oil was a highly viscous liquid, and problems occurred in recovering rubber and carbon black and in transferring the residue oil as fuel.

### Example 17

The metal composite plastics coated by polypropylene and polyethylene, which were prepared in Example 1, were immersed in a reaction furnace, heated to 280°C, for 5 minutes, which furnace was in a nitrogen atmosphere and was filled with an organic medium (120 CP of melt viscosity at 280°C and 75°C of softening point determined by R&B method) consisting of a coal tar heavy oil having 350°C or higher boiling point and 0.9 of aromatic index and 80 wt.% of pitch having 110°C of softening point.

After the immersion, the plastics floated onto the liquid surface were recovered, and the sedimented steel rod was also recovered. The separation rate of the steel rod and the recovery rate of the plastics were determined. The recovered plastics were visually inspected to evaluate giving grade (○) for non-adhesiveness and (X) for adhesiveness.

The result is shown in Table 2. For the case that the plastics were polypropylene, the separation rate of steel rod was 94% and the recovery rate of plastics was 89%; for polyethylene, the separation rate of steel rod was 93% and the recovery rate of plastics was 90%. The status of the recovered plastics was non-adhesive for both plastics.

### Example 18

Metal composite plastics were treated in a similar procedure as in Example 17, applying an organic medium having 100 CP of melt viscosity at 250°C and 65°C of softening point, prepared by mixing a coal tar heavy oil having 350°C or higher boiling point and 0.9 of aromatic index with 10 wt.% aluminum chloride, and by treating the mixture in nitrogen atmosphere at 200°C for 5 hours.

The result is shown in Table 2. For the case that the plastics were polypropylene, the separation rate of steel rod was 91% and the recovery rate of plastics was 89%; for polyethylene, the separation rate of steel rod was 88% and the recovery rate of plastics was 88%. The status of the recovered plastics was non-adhesive for both plastics.

### Example 19

Metal composite plastics were treated in a similar procedure as in Example 17, applying an organic medium having 100 CP of melt viscosity at 250°C and 55°C of softening point, prepared by mixing a coal tar heavy oil having 350°C or higher boiling point and 0.9 of aromatic index with 10 wt.% N-dodecanoyl-L-glutamic acid-α,γ-dibutylamide.

The result is shown in Table 2. For the case that the plastics were polypropylene, the separation rate of steel rod was 92% and the recovery rate of plastics was 85%; for polyethylene, the separation rate of steel rod was 92% and the recovery rate of plastics was 87%. The status of the recovered plastics was non-adhesive for both plastics.

**Table 2**

| Resin | Polypropylene | | | Polyethylene | | |
|---|---|---|---|---|---|---|
| | Separation rate of steel rod (%) | Recovery rate of resin (%) | Presence (X) and absence (○) of adhesiveness of resin | Separation rate of steel rod (%) | Recovery rate of resin (%) | Presence (X) and absence (○) of adhesiveness of resin |
| Example 17 | 94 | 89 | ○ | 93 | 90 | ○ |
| Example 18 | 91 | 89 | ○ | 88 | 88 | ○ |
| Example 19 | 92 | 85 | ○ | 92 | 87 | ○ |

### Example 20

A door (7 kg) containing 8.5 wt.% plastics, removed from a waste automobile, was treated in a similar procedure as in Example 17.

The recovered plastics were not viscous at room temperature, and were readily transferable by pneumatic conveyer system. The recovery rate of the plastics was 92%. The carbon adhered to the door was 0.1 wt.% or less.

The recovered plastics were pulverized to pieces of 10 mm or smaller sizes, and were charged into a blast furnace at a ratio of 40 kg/ton-pig iron by a waste plastics blowing system comprising a storage tank, a pneumatic conveyer line, and a blowing lance. During storage and pneumatic conveying stages, no bridging and transfer pipe plugging occurred, thus ensured stable operation of charge. The coke ratio and the charge ratio of pulverized coal were 400 kg/t and 60 kg/t, respectively.

For both tap rate and the properties, the obtained melt iron gave the same with the case of non-charge of waste plastics, (440 kg/t), and no influence was observed on both the blast furnace gas cooling apparatus and the operation thereof. Accordingly, the application of waste plastics that were treated by a method according to the present invention reduces the consumption of coke in the blast furnace operation.

### Example 21

A shredder dust containing 40 wt.% plastics and 10 wt.% iron was treated in a similar procedure as in Example 17.

The recovery rate of iron with a magnetic separation unit was 95%. The recovered plastics were not viscous at room temperature, and were readily transferable by pneumatic conveyer system. The recovery rate of the plastics was 92%.

The recovered plastics were charged to a blast furnace in a similar procedure as in Example 20. During storage and pneumatic conveying stages, no bridging and transfer pipe plugging occurred, thus ensured stable operation of charge.

### Example 22

Waste plastics (50 g) that were recovered from a waste automobile having a composition listed in Table 3 and that were pulverized to pieces of 20 x 20 x 20 mm in size were treated by an apparatus for treating waste plastics that contained halogenated hydrocarbons, shown in Fig. 1, by immersing thereof in a treatment furnace that was filled with a coal tar distillate, heated to 280°C, having 350°C or higher boiling point and 0.9 of aromatic index, for 5 minutes.

After the immersion, the floated matter was filtered at 150°C, and the lump waste plastics were recovered. The volume of the recovered waste plastics was reduced to 10% of that before the immersion, while giving increase in density thereof by 8.5 times, thus drastically improved the handling ability. The recovery rate of the waste plastics was 85%.

The generated gas was collected. Analysis of the gas showed that the gas contained 30 wt.% Fleon 11, the recovery rate thereof was 99% (with 0.01 wt.% of concentration in plastics).

The recovered plastics were charged to a blast furnace in a similar procedure as in Example 20. For both tap rate and the properties, the obtained melt iron gave the same with the case of non-charge of waste plastics, (440 kg/t), and no influence was observed on both the blast furnace gas cooling apparatus and the operation thereof. Accordingly, the application of waste plastics that were treated by a method according to the present invention reduces the consumption of coke in the blast furnace operation.

### Example 23

Waste plastics (1.2 wt.% of Fleon 11 concentration) that were recovered from a waste refrigerator having a composition listed in Table 3 and that were pulverized to pieces of 20 x 20 x 20 mm in size were treated by an apparatus for treating waste plastics that contained halogenated hydrocarbons, shown in Fig. 1, by immersing thereof in a treatment furnace heated to 280°C and filled with a coal tar distillate having 300°C or higher boiling point and 0.8 of aromatic index, for 5 minutes.

The volume of the recovered waste plastics was reduced to 8% from that before the immersion, while giving increase in density thereof by 10 times or more, thus drastically improved the handling ability. The recovery rate of the waste plastics was 90%.

The generated gas was cooled by dry ice, and the condensate was analyzed to find the recovery rate of Fleon 11 of 99.9%.

### Example 24

Waste plastics that were recovered from a waste packaging material having a composition listed in Table 3 and that were pulverized to pieces of 10 x 10 x 10 mm in size were treated by an apparatus for treating waste plastics that contained halogenated hydrocarbons, shown in Fig. 1, by immersing thereof in a treatment furnace heated to 280°C and filled with a petroleum vacuum distillate residue having 300°C or higher boiling point and 0.4 of aromatic index, for 5 minutes.

The volume of the recovered waste plastics was reduced to 30% from that before the immersion, while giving increase in density thereof by about 3 times, thus drastically improved the handling ability. The recovery rate of the waste plastics was 85%.

### Comparative Example 8

Waste plastics recovered from a waste automobile were treated in a similar procedure as in Example 22, applying a petroleum vacuum distillate residue having 280°C or less boiling point of and 0.15 of aromatic index as the organic medium.

The volume of the recovered waste plastics was reduced to 20% from that before the immersion, and the recovery rate was 25%. The residue oil was highly viscous liquid, and problems occurred in recovery of plastics and in transfer as a base material for blast furnace operation.

The analysis of generated gas showed a low recovery rate of Fleon 11, around 35%.

### Comparative Example 9

Waste plastics recovered from a waste refrigerator were treated in a similar procedure in Example 23, applying a petroleum vacuum distillate residue having 280°C or less boiling point and 0.15 of aromatic index as the organic medium. The volume of the recovered waste plastics was reduced to 15% from that before the immersion, and the recovery rate was 19%. The residue oil raised similar problems as in Comparative Example 8.

The analysis of generated gas showed a low recovery rate of Fleon 11, around 30%.

**Table 3**

| Plastics containing foamed resins | Foam polyurethane | Foam polystyrene | Polypropylene, polyethylene, etc. |
|---|---|---|---|
| Polyurethane recovered from waste automobile | 75wt% | 0 | 25wt% |
| Polyurethane recovered from waste refrigerator | 80wt% | 0 | 20wt% |
| Waste packaging materials | 0 | 75wt% | 25wt% |

### Example 25

Waste plastics (30 g) that were recovered from a waste automobile having a composition listed in Table 4 were treated by an apparatus for treating waste plastics that contained halogenated hydrocarbons, shown in Fig. 2, by immersing thereof in a treatment furnace heated to 280°C and filled with a coal tar distillate having 350°C or higher boiling point and 0.9 of aromatic index, for 5 minutes.

After the immersion, the floated matter was filtered at 150°C, and the lump waste plastics were recovered. The volume of the recovered waste plastics was reduced to 20% of that before the immersion, while giving increase in density thereof by 4 times, thus drastically improved the handling ability. The recovery rate of the waste plastics was 80%.

### Example 26

Waste plastics (30 g) that were recovered from a waste carpet having a composition listed in Table 4 and containing flocks were treated by an apparatus for treating waste plastics that contained halogenated hydrocarbons, shown in Fig. 2, by immersing thereof in a treatment furnace heated to 280°C and filled with a coal tar distillate having 300°C or higher boiling point and 0.8 of aromatic index, for 5 minutes.

The volume of the recovered waste plastics was reduced to 25% from that before the immersion, while giving increase in density thereof by 3 times or more, thus drastically improved the handling ability. The recovery rate of the waste plastics was 90%.

### Example 27

Waste plastics that were recovered from a waste building material having a composition listed in Table 4, that contained wood, and that were pulverized to pieces of 10 x 10 x 10 mm in size were treated by an apparatus for treating waste plastics that contain halogenated hydrocarbons, shown in Fig. 1, by immersing thereof in a treatment furnace heated to 280°C and filled with a petroleum vacuum distillate residue having 300°C or higher boiling point and 0.4 of aromatic index, for 5 minutes.

The volume of the recovered waste plastics was reduced to 50% from that before the immersion, while giving increase in density thereof by around 2 times, thus drastically improved the handling ability. The recovery rate of the waste plastics was 80%.

### Comparative Example 10

Waste plastics containing flocks recovered from a waste automobile were treated by a similar procedure as in Example 25, applying a petroleum vacuum distillate residue having 280°C or less boiling point and 0.15 of aromatic index as the organic medium.

The volume of the recovered waste plastics was reduced to 30% from that before the immersion, and the recovery rate was 45%. The residue oil was highly viscous liquid, and problems occurred in recovery of plastics and in transfer as a base material for blast furnace operation.

### Comparative Example 11

Waste plastics that were recovered from a waste carpet containing flocks were treated by a similar procedure as in Example 26, applying a petroleum vacuum distillate residue having 280°C or less boiling point and 0.15 of aromatic index.

The volume of the recovered waste plastics was reduced to 35% from that before the immersion, and the recovery rate was 40%. The residue oil raised similar problems as in Comparative Example 10.

**Table 4**

| Waste plastics containing fiber flocks | PET, PA, PP fibers | Wood chips | Polyethylene, etc. |
|---|---|---|---|
| Flocks recovered from waste automobile | 80wt% | 5wt% | 15wt% |
| Flocks recovered from waste carpet | 80wt% | 0 | 20wt% |
| Waste building materials | 0 | 75% | 25wt% |

### Example 28

A steel rod having 20 mm in outer diameter and 20 mm in length was coated by polyvinylchloride having 20 mm in inner diameter and 20 mm in length by thermal molding to prepare metal composite plastics containing chlorine. Thus prepared composite plastic specimen was subjected to heat treatment described below.

A coal tar heavy oil having 300 to 550°C of boiling point and 0.9 of aromatic index was used as the organic medium. The specimen was immersed in a reaction furnace heated to 300°C and filled with the organic medium for 5 minutes. After the immersion, the floated char and the sedimented steel rod were taken out from the furnace, and the weight thereeach was determined to derive the separation rate of plastic and the rate of dechlorination.

The amount of carbon adhered to the steel rod was 1 wt.% or less. The recovery rate of char was 95% as carbon basis. The rate of dechlorination was 93%. Analysis of hydrochloric acid obtained from rinsing the flue gas in a washing bottle filled with distilled water showed 85% of the hydrochloric acid yield and 0.1 wt.% or less of impurities.

The recovered plastics were charged to a blast furnace in a similar procedure as in Example 20. The obtained melt iron showed no change in pot amount and properties from those in the case of not-applying waste plastics charge, (440 kg/t), and no influence was observed on the operation of blast furnace gas cooling apparatus. Accordingly, the application of waste plastics that were treated by a method according to the present invention reduces the consumption of coke in the blast furnace operation.

### Example 29

A coal tar that was prepared by removing low boiling fractions not higher than 300°C of boiling point by distillation and that had 0.8 of aromatic index was used as the organic medium. Metal composite plastics that contain chlorine, which metal was coated by polyvinylidene chloride, were treated in a similar procedure as in Example 28. The separation rate of plastics and the rate of dechlorination were determined.

The amount of carbon adhered to the steel rod was 1 wt.% or less, the recovery rate of char was 90% on carbon basis, the rate of dechlorination was 91%, the yield of hydrochloric acid was 84%, and the content of impurities was 0.1 wt.% or less.

### Example 30

An alkyldiphenyl having 350°C of boiling point and 0.86 of aromatic index was used as the organic medium. Metal composite plastics that contain chlorine, which metal was coated by polyvinylidene chloride, were treated in a similar procedure as in Example 28. The separation rate of plastics and the rate of dechlorination were determined.

The amount of carbon adhered to the steel rod was 1 wt.% or less, the recovery rate of char was 90% on carbon basis, the rate of dechlorination was 89%, the yield of hydrochloric acid was 81%, and the content of impurities was 0.1 wt.% or less.

### Example 31

A steel plate coated by polyvinylchloride film was cut to pieces of 20 x 20 mm in size. The pieces were immersed in a reaction furnace under a nitrogen gas atmosphere, filled with 300°C coal tar having 300 to 350°C of boiling point and 0.9 of aromatic index, for 5 minutes. After the immersion, the separation rate of plastics and the rate of dechlorination were determined as in the case of Example 28.

The polyvinylchloride film was separated from the steel plate. The amount of carbon adhered to the steel rod was 1 wt.%, the recovery rate of char was 89% on carbon basis, the rate of dechlorination was 85%, the yield of hydrochloric acid was 81%, and the content of impurities was 0.1 wt.% or less. The flue gas line did not show deposition of phthalic acid anhydride.

### Example 32

Petroleum vacuum distillation residue having 300°C or higher boiling point and 0.28 of aromatic index was used as the organic medium. A steel plate coated with polyvinylchloride film was treated in a similar procedure as in Example 31.

The amount of carbon adhered to the steel rod was 1 wt.%, the recovery rate of char was 87% on carbon basis, the rate of dechlorination was 79%, the yield of hydrochloric acid was 79%, and the content of impurities was 0.1 wt.% or less.

### Comparative Example 12

A petroleum vacuum distillation residue having 280°C or less boiling point and 0.15 of aromatic index was used as the organic medium. Metal composite waste plastics containing chlorine were treated in a similar procedure as in Example 28.

The amount of carbon adhered to the steel rod was 6 wt.%, the recovery rate of char was 55% on carbon basis, the rate of dechlorination was 61%, the yield of hydrochloric acid was 60%, and the content of impurities was 2.5 wt.%. Compared with Example 28, the separation of plastic was poor, and the residue oil was a very viscous liquid.

### Comparative Example 13

A petroleum vacuum distillation residue having 280°C of boiling point and 0.15 of aromatic index was used as the organic medium. A steel plate coated with polyvinylchlorlde film was treated in a similar procedure as in Example 31.

The amount of carbon adhered to the steel rod was 5 wt.%, the recovery rate of char was 65% on carbon basis, the rate of dechlorination was 75%, the yield of hydrochloric acid was 61%, and the content of impurities was as high as 4 wt.%. The residue oil was a very viscous liquid.

### Comparative Example 14

A molten salt (KNO₃-NaNO₂-NaNO₃) was used instead of organic medium. A metal composite waste plastic door containing chlorine was treated in a similar procedure as in Example 28.

The recovery rate of char was 88% on carbon basis. However, the char contained the molten salt therein, and the properties of the recovered char could not be applied as a raw material for blast furnace charge.

### Example 33

A copper wire coated with a polyvinylchloride resin having a composition given in Table 5, (3 mm in diameter, 50 mm in length, 100 9 in weight) was immersed in a treatment furnace filled with a 350°C coal tar distillate having 350°C or higher boiling point and 0.9 of aromatic index, for 5 minutes. After the immersion, the sedimented copper wire was taken out, and was filtered at 200°C to remove the solvent. In addition, char which was floated on the treated coal tar distillate was recovered.

The amount of carbon adhered to the steel rod was 1 wt.% or less, the recovery rate of copper wire was 99.9%, the recovery rate of char was 90% on carbon basis, and the chlorine concentration in the char was 1.5 wt.%.

### Example 34

A petroleum vacuum distillation residue having 300°C or higher boiling point and 0.4 of aromatic index was used as the organic medium. A copper wire coated with polyvinylchloride was treated in a similar procedure as in Example 33.

The amount of carbon adhered to the steel rod was about 0.5 wt.%, the recovery rate of copper wire was 99%, the recovery rate of char was 87% on carbon basis, and the chlorine concentration in the char was 1.8 wt.%.

### Comparative Example 15

A petroleum vacuum distillation residue having 290°C or less boiling point and 0.15 of aromatic index was used as the organic medium. A copper wire coated with polyvinylchloride was treated in a similar procedure as in Example 33.

A 6 wt.% of non-dissolved resin was adhered to the copper wire. The residue oil was a very viscous liquid.

### Comparative Example 16

A molten salt (KNO₃-NaNO₂-NaNO₃) was used instead of organic medium. A copper wire coated with polyvinylchloride was treated in a similar procedure as in Example 33.

A 15 wt.% of char was adhered to the copper wire.

**Table 5**

| Kind of coated wire | Coating | Wire |
|---|---|---|
| Conductive wire coated with polyvinylchloride resin | Polyvinylchloride resin (50 wt%) | Copper (50 wt.%) |

### Example 35

A waste automobile skeleton was immersed in a heat treatment tank using the apparatus shown in Fig. 3, which tank was filled with a coal tar heavy oil having 300 to 550°C of boiling point and 0.9 of aromatic index, and containing 5 wt.% blasting material (dry non-viscous silica sand having 0.5 to 2.5 mm in sizes), under a nitrogen gas atmosphere, at 280°C, for 20 minutes. The coal tar heavy oil in the heat treatment tank was circulated.

After the immersion, the molten plastics that were floated on the coal tar heavy oil were sent to a specific gravity separation unit for recovering thereof. The recovery rate was about 80% to the amount of plastics contained in the waste automobile skeleton before the treatment. The organic matter left in the waste automobile skeleton after removed the plastics was about 5 wt.%.

On the other hand, for the case that no blasting material was added to the coal tar heavy oil, the recovery rate of plastics was about 67%, and the organic matter left in the waste automobile skeleton after removed the plastics was about 18 wt.%.

From the result given above, the circulation of coal tar heavy oil containing a blasting material significantly increases the recovery rate of plastics.

### Example 36

Using the apparatus given in Fig. 4, a waste automobile skeleton was treated in a similar procedure as in Example 35. In this example, however, the waste automobile skeleton was charged to the blasting chamber before immersing thereof in the heat treatment tank, and was subjected to shot-blasting under 2.5 atm for 15 minutes using a dry non-viscous silica sand having 0.5 to 2.5 mm in size. The amount of coating film separated by the blasting was about 25% to the total coating film amount over the waste automobile skeleton.

The recovery rate of plastics was about 70%. The organic matter left in the waste automobile skeleton after removed the plastics was about 5 wt.%. Observation of the waste automobile skeleton after removed the plastics showed very little coating film thereon.

On the other hand, for the case of no-blasting application, the recovery rate of plastics was about 60%, and the organic matter left on the waste automobile skeleton after removed the plastics was about 15 wt.%. Observation of the waste automobile skeleton after removed the plastics showed about 80% of coating film left thereon to the total amount of coating film.

From the above-described result, it is shown that the blasting treatment before the immersion in coal tar heavy oil gives similar effect to the case of circulation of coal tar heavy oil containing a blasting material.

### Example 37

A waste tire chips having 50 x 50 mm in size, containing 30 wt.% carbon black, 8 wt.% steel wire, 60 wt.% rubber, and 2 wt.% other materials, was pulverized to 5 mm in average particle size using an impact crusher. Steel wires, fibers, and the like were removed from the pulverized waste tire chips. Then, the tire chips were immersed in a treatment furnace heated to 300°C and filled with a coal tar distillate having 350°C or higher boiling point and 0.9 of aromatic index, for 20 minutes.

After the immersion, the rubber floated was recovered. The carbon black was uniformly dispersed in the solvent.

The coal tar distillate was filtered at 200°C, and the carbon black was recovered. The recovery rate of rubber and of carbon black was 89% and 88%, respectively.

### Example 38

Using a coal tar distillate having 300°C or higher boiling point and 0.8 of aromatic index, as the organic medium, a waste rubber was treated in a similar procedure as in Example 37.

The recovery rate of rubber and of carbon black was 88% and 85%, respectively.

### Example 39

A waste rubber which was prepared by pulverizing waste tire chips to 9 mm in average particle size using an impact crusher was treated in a similar procedure as in Example 37.

The recovery rate of rubber and of carbon black was 85% and 83%, respectively.

### Example 40

A waste rubber belt conveyer consisting of 25 wt.% carbon black, 10 wt.% steel wires, 60 wt.% rubber, and 5 wt.% of other materials was pulverized to 0.5 mm in average particle size using a crusher and a low temperature pulverizer. Thus crushed pieces were immersed in a treatment furnace heated to 300°C and filled with a petroleum vacuum distillate residue having 300°C or higher boiling point and 0.3 of aromatic index, for 20 minutes.

The recovery rate of rubber and of carbon black was 92% and 93%, respectively. The steel wire was sedimented.

### Comparative Example 17

Waste tire chips were pulverized to 5 mm in average size using an impact crusher, and steel wires, fibers, and other foreign materials were removed from the chips. Thus prepared tire chips were treated in a similar procedure as in Example 37, using a petroleum vacuum distilled residue having 280°C or less boiling point and 0.15 of aromatic index as the organic medium.

The recovery rate of rubber and of carbon black was as low as 55% and 30%, respectively. The residue oil was a highly viscous liquid, and problems occurred in recovering rubber and carbon black and in transferring the residue oil as fuel.

### Comparative Example 18

A waste tire was pulverized to 15 mm square size, which were then immersed in a treatment furnace heated to 270°C and filled with a coal tar distillate having 350°C or higher boiling point and 0.9 of aromatic index, for 20 minutes.

The recovery rate of rubber and of carbon black was as low as 50% and 15%, respectively. The recovered rubber was hardened and carbonized.

### Example 41

A part of a waste automobile comprising the elements shown in Tables 6 through 8 was immersed in a powder fluidized bed at 450°C for 2 minutes. The powder fluidized bed was formed by bubbling-fluidizing a sand bath filled with an FCC catalyst and by heated blowing nitrogen gas. After the immersion, the residue was taken out and was sent to a washing chamber, where a hot air was blown against the residue in a closed state to remove the catalyst.

The analysis of the recovered products revealed that the recovery rate of the decomposition oil and of the gas was 5.15% and 1.12%, respectively, to a single unit of waste automobile. The amount of carbon adhered to the residue was 2.0 wt.%.

The obtained residue was then compressed in a press to a volume of one-fifteenth, (1000 mm in length, 1000 mm in width, and 500 mm in height). Along with coke, lime stone, silica rock, and serpentine, thus compressed residue was charged continuously to a shaft melting furnace, at a charge rate of 0.2:0.04:0.02:0.01, respectively, to the unity of the compressed residue. Then, oxygen and steam (1.4/1 of volumetric mixing ratio) were blown-in through the tuyeres of the melting furnace. At the same time, the recovered decomposition oil was charged at a rate of 40 kg/ton of residue. Thus, the molten iron and the molten slag were discharged.

Table 9 shows the industrial analysis given to the obtained residue. Table 10 shows the comparison of unit requirement of fuel during the operation of melting furnace. Table 11 shows the composition of molten iron and molten slag discharged from a melting furnace. The volatile matter in the residue was as low as 1.0 wt.%, and no problem on apparatus and operation of melting furnace occurred. Compared with conventional method, the coke consumption decreased, and the obtained molten iron and molten slag have similar compositions thereto.

### Example 42

A part of waste automobile was treated in a procedure as in Example 41, in a powder fluidized bed heated to 390°C, applying ZMS-5 as the decomposition catalyst.

To a single unit of waste automobile, the recovery rate of decomposition oil and of gas was 2.94% and 3.22%, respectively. The amount of carbon adhered to residue was 2.0 wt.%.

After washing thus obtained gas with water, the gas was blown into the melting furnace through tuyeres, and the melting furnace was operated under similar condition as that of Example 41.

The results are shown in Tables 9 through 11. The volatile matter in the residue was as low as 1.0 wt.%, and no problem occurred in apparatus and operation of the melting furnace. Compared with conventional method, the coke consumption decreased, and the obtained molten iron and molten slag have similar compositions thereto.

### Comparative Example 19

A part of waste automobile was treated in a procedure as in Example 41, in a powder fluidized bed heated to 390°C, applying alumina beads having 0.5 mm in size as the decomposition catalyst.

The residue contained about 50% of the plastics existed in the waste automobile. The recovery rate of decomposition oil and of gas was 1.8% and 0.4%, respectively. The volatile matter in the residue was as high as 8 wt.%, so that the generation of soot and tar was expected. Thus, the residue could not be applied to the charge to the melting furnace.

**Table 6**

| | |
|---|---|
| Steel | 65wt% |
| Non-ferrous metals | 7wt% |
| Non-metals | 28wt% |
| Total | 100wt% |

**Table 7**

| | |
|---|---|
| Fe | 59wt% |
| C | 12wt% |
| SiO₂ | 3.1wt% |
| Cu | 0.6wt% |
| Other | 25wt% |

**Table 8**

| | |
|---|---|
| Volatile matter | 22wt% |
| Ash + Fixed carbon | 78wt% |

**Table 9**

| | Example 41, 42 | Comparative Example 19 |
|---|---|---|
| Volatile matter | 1.0wt% | 8.0wt% |
| Ash + Fixed carbon | 99.0wt% | 92wt% |

**Table 10**

| | | Example 41 | Example 42 | Conventional Example |
|---|---|---|---|---|
| Unit requirement of charged fuel | Coke (kg/t-pig) | 450 | 450 | 500 |
| | Carbide (kg/t-pig) | 10 | 10 | 0 |
| Unit requirement of blown-in fuel | Decomposition oil (kg/t-pig) | 40 | 40 | 0 |
| | Gas (Nm³/t-pig) | 0 | 3.6 | 0 |
| Unit requirement of charged and blown-in fuels (Mcal/t-pig) | | 3235 | 3235 | 3235 |
| Total of prices of charged and blown-in fuels (Ratio to example of conventional method) | | 0.91 | 0.91 | 1 |

**Table 11**

| | Example 41 | | Example 42 | | Conventional Example | |
|---|---|---|---|---|---|---|
| | Molten iron | Molten slag | Molten iron | Molten slag | Molten iron | Molten slag |
| Fe | 93.1wt% | 1.0wt% | 93.1wt% | 0.9wt% | 93.5wt% | 1.1wt% |
| C | 4.5wt% | | 4.5wt% | | 4.5wt% | |
| Si | 0.6wt% | | 0.5wt% | | 0.5wt% | |
| Cu | 0.6wt% | | 0.6wt% | | 0.6wt% | |
| CaO | | 44wt% | | 45wt% | | 43wt% |
| Al₂O₃ | | 19wt% | | 18wt% | | 16wt% |
| SiO₂ | | 39wt% | | 38wt% | | 39wt% |
| S | 0.06wt% | 1.5wt% | 0.08wt% | 1.5wt% | 0.04wt% | 1.9wt% |

## Claims

1. A method for treating waste plastics comprising the steps of: immersing waste plastics in an organic medium that has above 400°C of boiling point, 0.2 or higher aromatic index, and being heated to temperatures of from 200 to 400°C; and separating the plastics from inorganic materials.

2. A method for treating waste plastics comprising the steps of: immersing waste plastics in an organic medium that has 300 to 400°C of boiling point, 0.2 or higher aromatic index, and being heated to temperatures of from 200°C to the boiling point thereof; and separating the plastics from inorganic materials.

3. The method for treating waste plastics of claim 1 or claim 2, wherein the waste plastics are shredder dust.

4. The method for treating waste plastics of claim 1 or claim 2, wherein the organic medium contains a plastic decomposition catalyst.

5. The method for treating waste plastic of claim 1 or claim 2, wherein the organic medium contains pitch and has 50 to 150°C of softening point.

6. The method for treating waste plastics of claim 1 or claim 2, wherein the organic medium contains an agent to raise the softening point and has 50 to 150°C of softening point.

7. The method for treating waste plastics of claim 1 or claim 2, wherein the organic medium contains pitch and an agent to raise the softening point, and has 50 to 150°C of softening point.

8. The method for treating waste plastics of claim 1 or claim 2, wherein the organic medium contains pitch, has 50 to 150°C of softening point, and has 200 CP or lower viscosity in heated state.

9. The method for treating waste plastics of claim 1 or claim 2, wherein the organic medium contains an agent to raise the softening point, has 50 to 150°C of softening point, and has 200 CP or lower viscosity in heated state.

10. The method for treating waste plastics of claim 1 or claim 2, wherein the organic medium contains pitch and an agent to raise the softening point, has 50 to 150°C of softening point, and has 200 CP or lower viscosity in heated state.

11. The method for treating waste plastics of claim 1 or claim 2, wherein, on immersing the waste plastics containing halogenated hydrocarbons in an organic medium, the halogenated hydrocarbons released during the immersion stage is recovered.

12. An apparatus for treating waste plastics comprising: a waste plastics feed unit, a heat treatment tank being kept in a non-oxidizing gas atmosphere and being filled with an organic medium, a compressor that compresses flue gas emitted from the heat treatment tank, and a condenser that cools and condenses the compressed flue gas.

13. The method for treating waste plastics of claim 1 or claim 2, wherein, on immersing the waste plastics that contain chlorine in an organic medium, hydrogen chloride released during the immersion stage is recovered.

14. The method for treating waste plastics of claim 1 or claim 2, wherein, on immersing the waste plastics that contain metals in the organic medium, the immersion is carried out while circulating the organic medium that contains a blasting material.

15. The method for treating waste plastics of claim 1 or claim 2, wherein, before immersing the waste plastics that contain metals in the organic medium, the waste plastics that contain metals are treated by blasting.

16. A method for treating waste plastics comprising the steps of: immersing a waste rubber having 10 mm or less average particle size in an organic medium that has above 350°C of boiling point, 0.2 or higher aromatic index, and being heated to inorganic materials.

17. A method for treating waste plastics comprising the steps of: immersing a waste rubber having 10 mm or less average particle size in an organic medium that has 300 to 350°C of boiling point, 0.2 or higher aromatic index, and being heated to temperatures of from 250°C to the boiling point thereof; and separating the rubber from inorganic materials.

18. A method for treating waste plastics comprising the steps of: immersing the waste plastics that contain metals in a powder fluidized bed that contains a plastic decomposition catalyst and is heated to temperatures of from 200 to 800°C; and separating the plastics from the metals.
